# EUROPEAN PATENT APPLICATION

(11) **EP 4 783 106 A1**
(43) Date of publication of application: **29.07.2026**
(21) Application number: 25153622.3
(22) Date of filing: 23.01.2025
(51) Int. Cl.: G06T 5/70, G01S 17/89

(54) **NOISE REDUCTION FOR LASER SCANNER MEASUREMENTS BASED ON A TRAINED ADAPTIVE FILTER**

(71) Applicant: LEICA GEOSYSTEMS AG, 9435 Heerbrugg (CH)
(72) Inventor: FACCHIN, Aldo, 33082 Azzano Decimo (IT); CORAZZA, Paolo, 33080 Fiume Veneto (IT); SANELLI, Valerio, 33170 Pordenone (IT)
(74) Representative: Kaminski Harmann

(57) **Abstract**

The invention pertains to a method of reducing noise in 3D data. The method comprises receiving 3D data that has been captured by a first laser scanner with a first resolution in a first environment. The method further comprises reducing noise in the 3D data by utilizing a noise reduction filter, wherein the noise reduction filter has filtering settings. The invention is characterized in that a trained machine learning model uses the filtering settings, wherein the filtering settings are learned by the machine learning model in a training process. The training process comprises multiple steps. Firstly, it comprises receiving training data from at least two laser scanners, the training data comprising a first set and a second set of 3D data that are structured as point-clouds. Secondly, it the training process comprises clustering the second set of 3D data to produce clustered data. Furthermore, the training process comprises training the machine learning model using the clustered data.

## Description

### FIELD OF THE INVENTION

The present invention generally pertains to a method for reducing noise in 3D data produced by laser scanners. Specifically, the process comprises receiving 3D data that has been captured with a first laser scanner and reducing the noise using a noise reduction filter.

### BACKGROUND OF THE INVENTION

For autonomous driving applications, mobile mapping, simultaneous localization and mapping, or for the purpose of surveying, optical devices are commonly used which work with optical measuring beams for scanning a surface and capturing of the topography by the distance measurement to points on the sensed surface. A suitable scanning device may be a scanner system, such as a laser scanner, in particular a profiler, which allows for capturing a surface structure by guiding a measuring beam in a scanning manner over the surface and by capturing the spatial position of surface points in the scanning area with a distance measurement relating to the points and linking the measurement with angle information gathered at the time of the measuring beam emission. From the angle and distance information (range), so called range images of the scanned surfaces may be reconstructed.

In other words, an environment can be optically scanned and measured by means of a laser scanner emitting a laser measurement beam, e.g. using pulsed electromagnetic radiation, wherein an echo is received from a backscattering surface point of the environment and a distance to the surface point is derived and associated with an angular emission direction of the associated laser measurement beam. This way, a three-dimensional point cloud is generated. For example, the distance measurement may be based on the time of flight, the shape, and/or the phase of the pulse.

A profiler for capturing topographies may also be realized by an electro-optical distance meter, which is guided over a surface area in a scanning manner, and which may use laser light.

In linearly passable hollow spaces, such as rooms, corridors, mines, tunnels, canyons or alleys, the profiler is usually mounted to a vehicle in such a way that the scanning movement of the measuring beam - in a first scanning direction - takes place about an axis which is essentially parallel to the direction of movement of the vehicle, wherein the direction of movement of the vehicle is a second scanning direction.

Laser scanners, such as laser profilers, with high accuracy commonly come at high costs, while the accuracy of more affordable devices does not suffice for the application as mobile mapping systems. However, achieving centimeter-level accuracy is generally necessary for this type of application, which typically is not possible for low-end devices due to signal noise.

### OBJECT OF THE INVENTION

In view of the above circumstances, the object of the present invention is to provide a measuring process based on laser measurements that utilizes a trained filter for the reduction of noise in laser measurements, in particular laser scanners, more particularly laser profilers.

This objective is achieved by realizing the characterizing features of the independent claims. Features, which further develop the invention in an alternative or advantageous manner are described in the dependent patent claims.

Reducing or eliminating noise serves to increase the resolution of laser scanning devices, particularly of the low-cost and/or low-quality devices, in order to allow to enhance the applicability of laser scanning devices and allow for the utilization of low-end devices. This allows for the usage of low-end devices to create a detailed 3D reconstruction of an environment for precise measurement applications. The method described in this document applies in urban environments, which are rich in man-made structures such as buildings, roads, and other stationary objects, but it can also be used in non-urban environments.

### SUMMARY OF THE INVENTION

At least one of these objects is achieved by the computer-implemented method of claim 1, and/or the dependent claims of the present invention.

A first aspect of the invention pertains to a method for reducing noise in 3D data. The method comprises receiving (210) 3D data that has been captured by a first laser scanner with a first resolution in a first environment. Furthermore, the method comprises reducing (120) noise in the 3D data by utilizing a noise reduction filter, wherein the noise reduction filter has filtering settings. Said filtering settings are applied by a trained machine learning model, wherein the filtering settings are learned by the machine learning model in a training process. The training process comprises receiving training data from at least two laser scanners. The training data comprises a first set and a second set of 3D data. The first set of 3D data is captured with the first resolution and the second set of 3D data is captured with a second resolution. The second resolution is higher than the first resolution. The first set of 3D data and the second set of 3D data comprise data of the same environment, wherein measurements of the first and the second laser scanner are structured as point-clouds.

The training process further comprises clustering (230) the second set of 3D data to produce clustered data. The clustering comprises multiple steps. Firstly, it comprises classifying (232) point-cloud data of the second set of 3D data based on a semantic segmentation model. Classifying comprises assigning a plurality of classes to at least a subset of the second set of 3D data in order to produce a classified point-cloud. Said plurality of classes describe different objects to which each point belongs to. Secondly, it comprises identifying (234) clusters within the classified point-cloud. Further, the clustering comprises associating (236) regions of the point-cloud between the second set of 3D data and the first set of 3D data. Furthermore, the clustering comprises providing (238) the associated data as clustered data. This clustered data is structured as a point-cloud.

It is noted that the first set of 3D data and the second set of 3D data comprise data of the same environment. The 3D data can be of the same environment or of a different environment.

According to this aspect of the invention, the training process further comprises training the machine learning model using the clustered data and providing the noise reduction filter comprising the filter settings.

According to some embodiments, the method comprises a measurement process that uses the first laser scanner to produce the 3D data.

According to some embodiments, receiving the first set of 3D data comprises a measurement process. This measurement process comprises using the first laser scanner. Receiving the second set of 3D data further comprises a measurement process of the second laser scanner.

According to some embodiments, the first set of 3D data and the second set of 3D data comprises data of at least a second environment.

According to some embodiments, the machine learning model can be an unsupervised learning model. In certain embodiments, the machine learning model is an autoencoder model.

According to some embodiments, the first laser scanner is embodied as a laser profiler and/or the second laser scanner is embodied as a laser profiler.

According to some embodiments, the input data and the laser measurement data comprises at least one of trajectory data, range data, intensity data, angle data, or raw data of scan lines.

According to some embodiments, identifying clusters comprises determining local minima or maxima within angle and range data of the training data.

According to some embodiments, associating regions of the point-cloud comprises using calibration parameters of the second laser scanner to project points using the first laser scanner. Further, it comprises to select points of the point-cloud depending on a radius between the projected points and the corresponding point of the second set of 3D data.

According to some embodiments, the training comprises normalizing the clustered data.

It is noted that normalization of the data comprises adapting the scale of the data values to be comprised by a range of 0 to 1.

According to some embodiments, the reducing of noise comprises applying a smoothing filter. In certain embodiments, the reducing of noise comprises smoothing splines.

According to some embodiments, the process further comprises selecting between utilizing the smoothing filter, the trained filter, or both on the laser measurement data based on a weighing factor. In certain embodiments, determining the weighing factor can be based on the output of the smoothing filter and the trained filter using a subset of the input data as input. In more specific embodiments, the weighing factor is determined based on a root mean square deviation calculation.

According to some embodiments, the method further comprises visualizing the 3D data before and/or after reducing noise (120) on a user interface, in particular on a peripheral device or user display.

According to some embodiments, receiving the 3D data comprises capturing the 3D data by the first laser scanner, and the trained machine learning model is provided on the first laser scanner.

By means of example, the trained machine learning model is stored on data storage means, such as a storage drive, on the first laser scanner or on cloud storage, and made available to the first laser scanner for processing.

A second aspect of the invention pertains to computer program comprising instructions which, when the program is executed by a computer, cause the computer to carry out the method according to the first aspect of the invention.

A third aspect of the invention pertains to a laser scanner (1) that is configured for producing 3D data with a first resolution of a first environment. The laser scanner is configured for reducing noise (120) in the 3D data using a noise reduction filter that has filtering settings.

A trained machine learning model is provided on the laser scanner and configured to perform the noise reduction. The filtering settings are learned by the machine learning model in a training process. A trained machine learning model is provided on the laser scanner and configured to perform the noise reduction. The training process comprises receiving training data from at least two laser scanners. The training data comprises a first set and a second set of 3D data. The first set of 3D data is captured with the first resolution and the second set of 3D data is captured with a second resolution. The second resolution is higher than the first resolution. The first set of 3D data and the second set of 3D data comprise data of the same environment, wherein measurements of the first and the second laser scanner are structured as point-clouds.

The training process further comprises clustering the second set of 3D data to produce clustered data. The clustering comprises multiple steps. Firstly, it comprises classifying point-cloud data of the second set of 3D data based on a semantic segmentation model. The classifying comprises assigning to at least a subset of the second set of 3D data a plurality of classes in order to produce a classified point-cloud. Said plurality of classes describe different objects to which each point belongs to. Secondly, the clustering comprises identifying clusters within the classified point-cloud. Further, clustering comprises associating regions of the point-cloud between the second set of 3D data and the first set of 3D data. Moreover, the clustering comprises providing the associated data as clustered data. The clustered data is structured as a point-cloud. The training process further comprises training the machine learning model using the clustered data and providing the noise reduction filter comprising the filter settings.

It is noted that - as the filter models are trained for an individual device - the filter model may be trained in advance to a measurement campaign for the specific device. This allows for noise-reduction of the laser measurements in real-time.

### BRIEF DESCRIPTION OF THE DRAWINGS

The invention in the following will be described in detail by referring to exemplary embodiments that are accompanied by figures, in which:
- Fig. 1: shows a laser profiler as it may be utilized in areas of application, such as mobile mapping;
- Fig. 2: shows an exemplary plot of laser measurement data as it may be captured by a laser profiler;
- Fig. 3: shows an exemplary polar plot of laser measurement data as it may be captured by a laser profiler,
- Fig. 4: shows a flowchart illustrating the steps of the method comprising the training process of the machine learning model.
- Fig. 5: shows a flowchart illustrating the steps comprised by the clustering step of the training process of Fig. 4.

### SPECIFIC EMBODIMENTS OF THE INVENTION

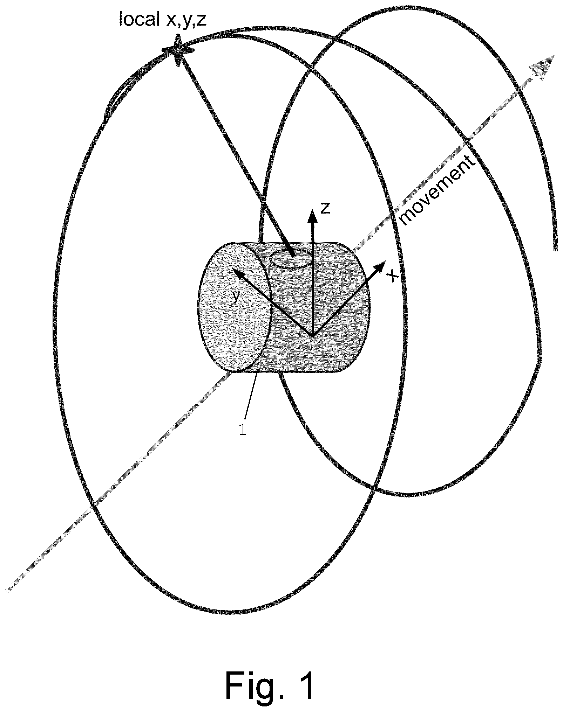

Figure 1 shows a laser scanner embodied as a laser profiler that allows for capturing a surface structure by guiding a measuring beam in a scanning manner over a surface. In other words, a laser measurement may be moved on a trajectory through an environment that is to be scanned. Therefore, the beam is moved such that it rotates about an axis, commonly orthogonal to the trajectory, in order to capture three-dimensional information about the environment. Consequently, the path of the laser measurement beam might result in a spiral.

The resolution of the laser scanner depends on a variety of factors. Hence, the desired minimal resolution for the application also limits the speed at which the laser scanner may be moved through the environment, therefore restricting the minimally possible time of measurement campaigns.

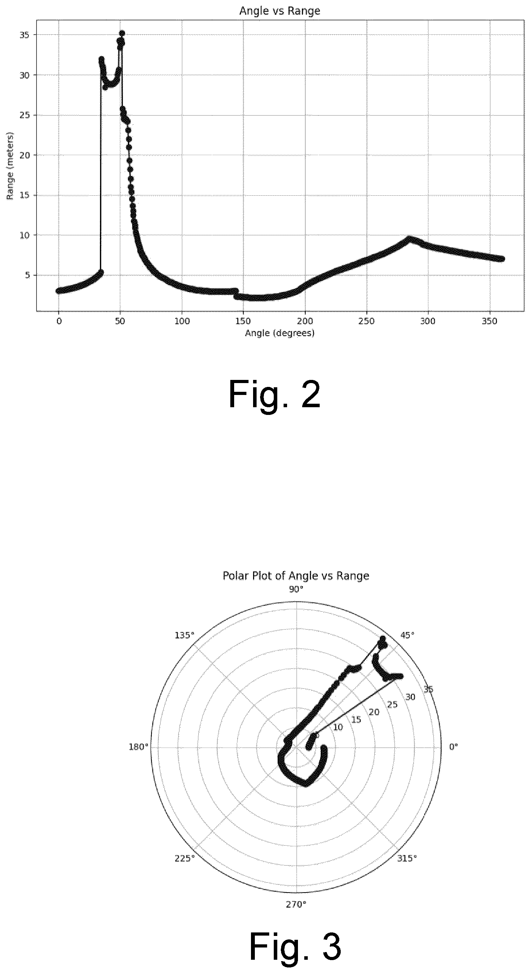

Figure 2 shows an exemplary plot of laser measurement data as it may be captured by a laser scanner, e.g. a laser profiler. It is noted that the X-Axis of the plot depicts angular information, whereas the Y-Axis of the plot depicts distance information (range) of the measurement.

Figure 3 shows an exemplary polar plot of laser measurement data according to Figure 2 as it may be captured by a laser scanner, e.g. a laser profiler. It is noted that the angular axis comprises angle information, whereas the radial axis depicts the distance information (range) of the measurement.

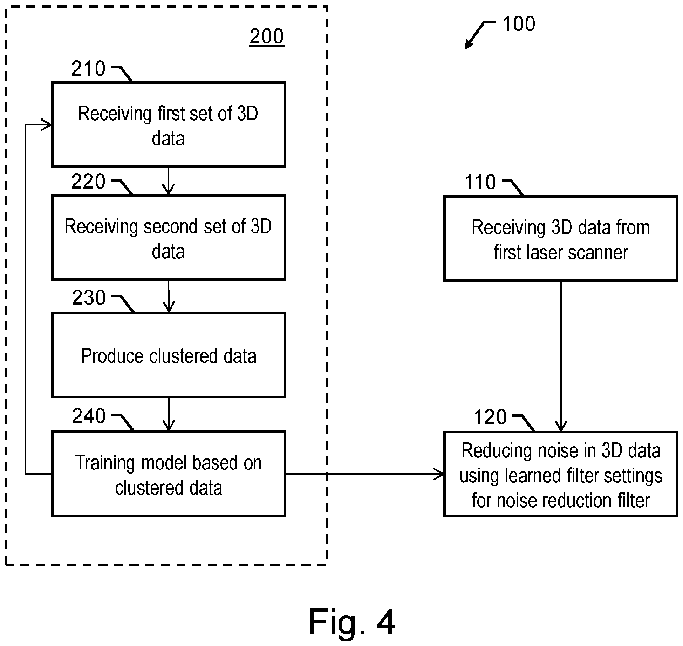

Figure 4 shows a flowchart illustrating the steps of an exemplary embodiment of a method 100 according to the invention. The method comprises receiving 110 three-dimensional (3D) data from a first laser scanner, for instance a point cloud. Optionally, receiving the 3D data comprises capturing the 3D data by the laser scanner.

Next, noise is reduced 120 from the 3D data using a noise reduction filter. This noise reduction filter is configured with filtering settings that depend on the first laser scanner. In order to configure the noise reduction filter, the filtering settings are learned with a machine learning model in a training process.

The training process 200 for learning the filtering settings starts with receiving a first set of 3D data 210 and a second set of 3D data 220. It is noted that the first set of 3D data was captured with a first resolution, whereas the second set of 3D data was captured with a second resolution. Also, the second resolution is higher than the first resolution. Moreover, both sets of 3D data comprise data of the same environment, the data being structured as point-clouds.

By means of example, the first set of 3D data and the second set of 3D data comprises data of a different environment than the environment of the 3D data for which the noise reduction is to be applied. However, in certain applications it also comprises 3D data of the same environment or even of multiple environments. In certain applications the first and second sets of 3D data are also captured in controlled environments or are artificially generated.

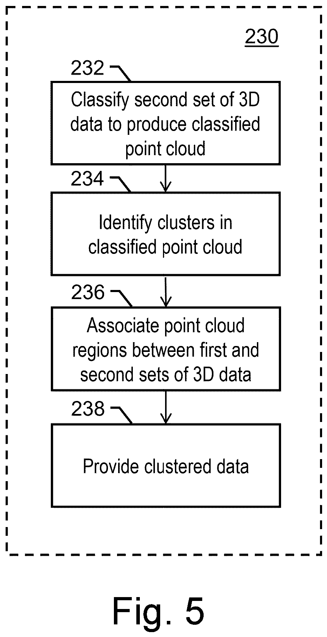

As a next step, the second set of 3D data is clustered 230 in order to produce clustered data. Clustering the data comprises multiple steps. Firstly, the data is classified 232. Secondly, clusters are identified 234. Subsequently, regions of the point-cloud of the second set of 3D data and the first set of 3D data are associated 236. Finally, the associated data is provided 238 as clustered data that is structured as point-clouds. The clustering process is explained in more detail in the figure description of Figure 5.

Next, the machine learning model is trained 240 based on the clustered data. Further, the trained model is used for reducing noise.

The learned filtering settings of the noise reduction filter are used for reducing the noise of the 3D data provided by the first laser scanner.

It is noted that the training process and the utilization of the noise reduction filter does not have to be conducted at the same time. It is also possible to carry out the training process prior to applying the filter. The usage of the noise reduction filer can also be done in real-time, i.e. during a measurement campaign, wherein the training process might be done in a controlled environment prior to it.

Figure 5 shows a flowchart illustrating the steps of an exemplary embodiment according to the invention of the clustering 230 within the training process. The clustering of the data comprises multiple steps. Firstly, point-cloud data of the second set of 3D data is classified 232 based on a semantic segmentation model. The classifying comprises assigning a plurality of classes to at least a subset of data of the second set of 3D data. The plurality of classes describes different objects to which each point belongs to. Secondly, the different clusters within the classified point-cloud data are identified 234. Subsequently, regions comprised by the point-cloud of the second set of 3D data is associated 236 with the corresponding regions comprised by the first set of 3D data. Next, the associated data, which is structured as a point-cloud, is provided 238 as clustered data for the training of the machine learning model, as it is described in the figure description of figure 4.

Although the invention is illustrated above, partly with reference to some preferred embodiments, it must be understood that numerous modifications and combinations of different features of the embodiments can be made. All of these modifications lie within the scope of the appended claims.

## Claims

1. Computer-implemented method (100) of reducing noise in 3D data, the method comprising
- receiving (110) 3D data that has been captured by a first laser scanner with a first resolution in a first environment, and
- reducing noise (120) in the 3D data using a noise reduction filter, the noise reduction filter having filtering settings,
**characterized in that**
reducing the noise (120) is performed by a trained machine learning model that is trained in a training process, the filtering settings being learned by the machine learning model in the training process, the training process (200) comprising
- receiving (210, 220) training data from at least two laser scanners, the training data comprising a first set and a second set of 3D data, the first set of 3D data being capture with the first resolution and the second set of 3D data being captured with a second resolution, the second resolution being higher than the first resolution, the first set of 3D data and the second set of 3D data comprising data of the same environment, wherein measurements of the first and the second laser scanner are structured as point-clouds, and
- clustering (230) the second set of 3D data to produce clustered data, wherein clustering comprises
▪ classifying (232) point-cloud data of the second set of 3D data based on a semantic segmentation model, wherein the classifying comprises assigning to at least a subset of the second set of 3D data a plurality of classes in order to produce a classified point-cloud, the plurality of classes describing different objects to which each point belongs to, and
▪ identifying (234) clusters within the classified point-cloud, and
▪ associating (236) regions of the point-cloud between the second set of 3D data and the first set of 3D data, and
▪ providing (238) the associated data as clustered data, the clustered data being structured as a point-cloud; and
- training (240) the machine learning model using the clustered data.

2. Computer-implemented method (100) according to claim 1, wherein receiving the 3D data comprises a measurement process (100) using the first laser scanner to produce the 3D data.

3. Computer-implemented method (100) according to claim 1 or 2, wherein receiving the first set of 3D data comprises a measurement process (100) using the first laser scanner and receiving the second set of 3D data comprises a measurement process of the second laser scanner.

4. Computer-implemented method (100) according to any of the preceding claims, wherein the first set of 3D data and the second set of 3D data comprise data of at least a second environment.

5. Computer-implemented method (100) according to any of the preceding claims, wherein the machine learning model is an unsupervised learning model, in particular an autoencoder model.

6. Computer-implemented method (100) according to any of the preceding claims, wherein the first laser scanner is embodied as a laser profiler and/or the second laser scanner is embodied as a laser profiler.

7. Computer-implemented method (100) according to any of the preceding claims, wherein the input data and the laser measurement data comprise at least one of trajectory data, range data, intensity data, angle data, or raw data of scan lines.

8. Computer-implemented method (100) according to any of the preceding claims, wherein identifying (234) clusters comprises determining local minima or maxima within angle and range data of the training data.

9. Computer-implemented method (100) according to any of the preceding claims, wherein associating (236) regions of the point-cloud comprises using calibration parameters of the second laser scanner to project points using the first laser scanner and select points of the point-cloud depending on a radius between the projected points and the corresponding point of the second set of 3D data.

10. Computer-implemented method (100) according to any of the preceding claims, wherein the training comprises normalizing the clustered data.

11. Computer-implemented method (100) according to any of the preceding claims, wherein reducing noise comprises applying a smoothing filter, in particular smoothing splines.

12. Computer-implemented method (100) according to claim 11, wherein the process further comprises selecting between utilizing the smoothing filter, the trained filter, or both on the laser measurement data based on a weighing factor, in particular wherein determining the weighing factor is based on the output of the smoothing filter and the trained filter using a subset of the input data as input, more particularly wherein the weighing factor is determined based on a root mean square deviation calculation.

13. Computer-implemented method (100) according to any of the preceding claims, wherein
- receiving (110) the 3D data comprises capturing the 3D data by the first laser scanner,
- and the trained machine learning model is provided on the first laser scanner.

14. A computer program comprising instructions which, when the program is executed by a computer, cause the computer to carry out the method of one of claims 1 to 13.

15. Laser scanner (1) configured for producing 3D data with a first resolution of a first environment, the laser scanner being configured for reducing noise (120) in the 3D data using a noise reduction filter, the noise reduction filter having filtering settings,
**characterized in that**
a trained machine learning model is provided on the laser scanner and configured to perform the noise reduction (120), the filtering settings being learned by the machine learning model in the training process, the training process (200) comprising
- receiving (210, 220) training data from at least two laser scanners, the training data comprising a first set and a second set of 3D data, the first set of 3D data being capture with the first resolution and the second set of 3D data being captured with a second resolution, the second resolution being higher than the first resolution, the first set of 3D data and the second set of 3D data comprising data of the same environment, wherein measurements of the first and the second laser scanner are structured as point-clouds, and
- clustering (230) the second set of 3D data to produce clustered data, wherein clustering comprises
▪ classifying (232) point-cloud data of the second set of 3D data based on a semantic segmentation model, wherein the classifying comprises assigning to at least a subset of the second set of 3D data a plurality of classes in order to produce a classified point-cloud, the plurality of classes describing different objects to which each point belongs to, and
▪ identifying (234) clusters within the classified point-cloud, and
▪ associating (236) regions of the point-cloud between the second set of 3D data and the first set of 3D data, and
▪ providing (238) the associated data as clustered data, the clustered data being structured as a point-cloud; and
- training (240) the machine learning model using the clustered data.
